# EUROPEAN PATENT SPECIFICATION

(11) **EP 1 491 607 B1**
(45) Date of publication and mention of the grant of the patent: **21.05.2008**
(21) Application number: 04014510.4
(22) Date of filing: 21.06.2004
(51) Int. Cl.: C09K 5/04

(54) **Refrigerant mixture and refrigeration cycle apparatus using the same**
Kühlmittelmischung und Kältekreislaufgerät, die diese verwendet
Mélange réfrigérant et appareil à cycle frigorifique l'utilisant

(30) Priority: 26.06.2003 JP 2003182317
(43) Date of publication of application: 29.12.2004
(60) Divisional application: 05025563.7
(73) Proprietor: MATSUSHITA ELECTRIC INDUSTRIAL CO., LTD, Kadoma-shi, Osaka 571-8501 (JP)
(72) Inventor: Fujitaka, Akira, Otsu-shi Shiga 520-2144 (JP)
(74) Representative: Körfer, Thomas

(56) References cited:
- WO-A-93/01152
- GB-A- 2 247 462
- US-A- 5 624 596
- US-A1- 2003 111 636
- US-B1- 6 524 495

## Description

### Technical Field

The present invention relates to a refrigerant mixture of difluoromethane and pentafluoroethane into which specific hydrocarbon is mixed, and to a refrigeration cycle apparatus using the refrigerant mixture.

### Background Technique

In a refrigeration cycle apparatus, in general, a compressor, a condenser, an expansion device such as a capillary tube and an expansion valve, an evaporator are connected to one another through pipes to constitute a refrigeration cycle, and refrigerant is allowed to circulate through the pipes, thereby carrying out a cooling or heating operation. As a refrigerant used in such a refrigeration cycle apparatus, hydrocarbon halide induced from methane or ethane is known. For convenience in writing, the refrigerant is expressed with a letter "R" followed by two- or three-digit numerals in accordance with ASHRAE STANDARD 34.

As a refrigerant for the refrigeration cycle apparatus, there is used a refrigerant mixture (R410A, hereinafter) of difluoromethane (R32, hereinafter) having a molecular formula of CH2F2 and a boiling point of -51.7°C, and pentafluoroethane (R125, hereinafter) having a molecular formula of C2HF5 and a boiling point of -48.1°C.

This R410A is a fluorocarbon-based refrigerant mixture in which chlorine is not included but hydrogen is included in its molecular structure (HFC refrigerant, hereinafter). And R410A is used as an alternative refrigerant of a fluorocarbon-based refrigerant including chlorine in its molecular structure (HCFC, hereinafter). For example, the HCFC refrigerant such as R22 has a depleting ability of ozone in the stratosphere, and its using amount and its production amount are restricted by Montreal Protocol. The HFC refrigerant has a problem that its global warming potential (GWP, hereinafter) is high.

In a refrigeration cycle apparatus using R410A, when the R410A is used for a heat pump water heater which supplies hot water, the refrigeration cycle can be a trans-critical cycle in which condensation process is not included. A discharging pressure in a compressor of the refrigeration cycle apparatus becomes higher than 4.2MPa which is a general set pressure (saturation pressure at 65°C) when R410A is used in an air conditioner, and the compressor discharging temperature is also prone to rise, and there is a problem that a pressure resistance of a refrigeration cycle part must be enhanced, the reliability of an insulative material of a compressor motor and a lubricant for a compressor must be enhanced.

US-A-5 624 596 discloses a non-flammable composition consisting essentially of difluoromethane, pentafluoroethane and at least one C4 to C9 hydrocarbon present in an amount of greater than 0 wt % to less than about 6 wt %. To this non-flammable composition at least one additive can be added which can be a dye. A method of refrigeration comprising condensing and evaporating the non-flammable composition is disclosed.

WO 93/01152 discloses an azeotropic or azeotrope-like composition of pentafluoroethane and propane comprising about 65 to 99 percent propane, and azeotropic or azeotrope-like compositions of pentafluoroethane and isobutane comprise about 90 to 99 weight percent pentafluoroethane and about 1 to 10 weight percent isobutane.

GB-A-2 247 462 discloses a refrigerant composition comprising a mixture in non-flammable proportions of pentafluoroethane (R125) with a hydrocarbon selected from propane, propylene, n-butane, isobutane and mixtures thereof. The R125 preferably comprises 60-80 wt%, especially 65-75 wt%, of the composition. The composition is more environmentally acceptable and has reduced ozone-depletion potential.

In view of the problem of the R410A and previous publications, it is an object of the present invention to provide an alternative refrigerant having excellent characteristics which can be used in an apparatus having a pressure resistance such as an air conditioner using R410A. It is another object of the invention to provide a refrigeration cycle apparatus using a refrigerant mixture of R410A and a hydrocarbon-based refrigerant (HC refrigerant, hereinafter) and capable of lowering the compressor discharging temperature.

### Disclosure of the Invention

To achieve the above object, the present invention provides a refrigerant mixture, characterized in that said refrigerant mixture comprises difluoromethane and pentafluoroethane, and propane is mixed into said refrigerant mixture, and characterized in that the concentration of propane in the entire refrigerant mixture is 65% by weight or higher and 90% by weight or lower.

In each of the above refrigerant mixtures, a leakage-detecting additive of odorant or coloring agent is added.

The invention also provides a refrigeration cycle apparatus using one of the above refrigerant mixtures.

In the refrigeration cycle apparatus of the invention, a compressor, a condenser, an expansion device and an evaporator are connected to one another in an annular form to form a refrigeration cycle, the refrigerant mixture and a fluid, i.e. water, are allowed to flow such that they are opposed to each other in the condenser, thereby exchanging heat.

In the refrigeration cycle apparatus, a gas-liquid separator is provided between an outlet of the expansion device and an inlet of the evaporator, the refrigerant mixture is separated by the gas-liquid separator into a gas phase refrigerant mixture and a liquid phase refrigerant mixture, a pipe of the gas-liquid separator is connected to the evaporator such that the liquid phase refrigerant mixture flows into the evaporator, and a pipe of the gas-liquid separator is connected to a suction line of the compressor such that the gas phase refrigerant mixture flows into the suction line of the compressor.

In the refrigeration cycle apparatus, a lubricant which is solved into the refrigerant mixture under an operation condition of the compressor and which has viscosity of 2 cm stokes or higher is used as a lubricant to be charged into the compressor.

In the refrigeration cycle apparatus, a low pressure shell type compressor is used as the compressor.

### Brief Description of the Drawings

Fig. 1 shows characteristics of an embodiment of refrigerants according to an embodiment of the present invention;
Fig. 2 is a circuit diagram of an embodiment of a refrigeration cycle apparatus using a refrigerant of the present invention;
Fig. 3 shows characteristics of variation of condensed refrigerant temperature and water temperature of a refrigeration cycle apparatus using a refrigerant of the present invention; and
Fig. 4 is a circuit diagram showing another embodiment of the refrigeration cycle apparatus using the refrigerant of the invention.

### Detailed Description of Preferred Embodiments

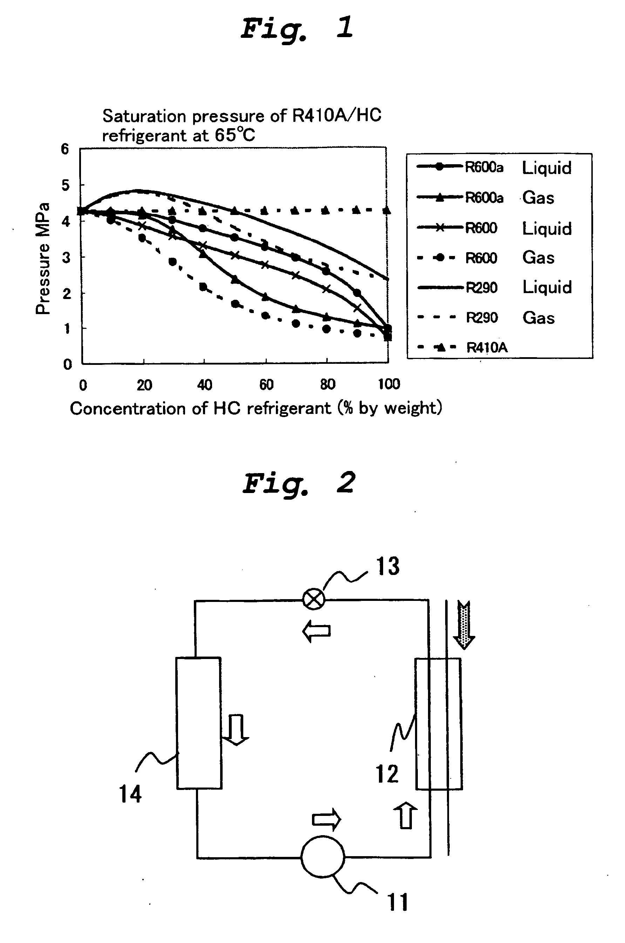

Concrete embodiments of the present invention will be explained using Figs. 1 to 4.

### (Embodiment 1)

Fig. 1 shows gas-liquid equilibrium characteristics of a refrigerant mixture of R410A and HC refrigerant at 65°C. Examples of HC refrigerants are propane (R290) having a molecular formula of CH3-CH2-CH3, a boiling point of -42.1°C and a critical temperature of 96.7°C; cyclopropane (RC270, hereinafter) having a molecular formula of C3H6, a boiling point of -32.9°C and a critical temperature of 125.2°C; isobutane (R600a, hereinafter) having a molecular formula of i-C4H8, a boiling point of -11.7°C and a critical temperature of 134.7°C; and butane (R600, hereinafter) having a molecular formula of n-C4H8, a boiling point of -0.5°C and a critical temperature of 152.0°C.

It can be found from Fig. 1 that R410A which is refrigerant, and RC270, R600a, R600 and the like constitute a non-azeotropic refrigerant mixture, and that although R410A and R290 have an azeotropic point when the concentration of R290 is about 25% by weight, they show non-azeotropic properties when the concentration of R290 is higher than about 25% by weight. In the case of R410A and RC270; R410A and R600a; and R410A and R600 which are non-azeotropic refrigerant mixtures, their saturation pressures are lowered as the concentration of HC refrigerant becomes high. In the case of R410A and R290 having azeotropic point, their saturation pressures become equal to or lower than that of R410A when the concentration of R290 is equal to or higher than about 50% by weight.

Fig. 2 shows a schematic block diagram of the refrigeration cycle apparatus according to the embodiment 1 of this invention. In Fig. 2, a compressor 11, a condenser 12, an expansion device 13 and an evaporator 14 are connected to one another through pipes to form a closed-circuit. In the condenser 12, water and a refrigerant mixture flow such that they are opposed to each other to exchange heat, thereby constituting a heat pump water heater. A refrigerant mixture comprising R410A and HC refrigerant having non-azeotropic properties is charged as a refrigerant.

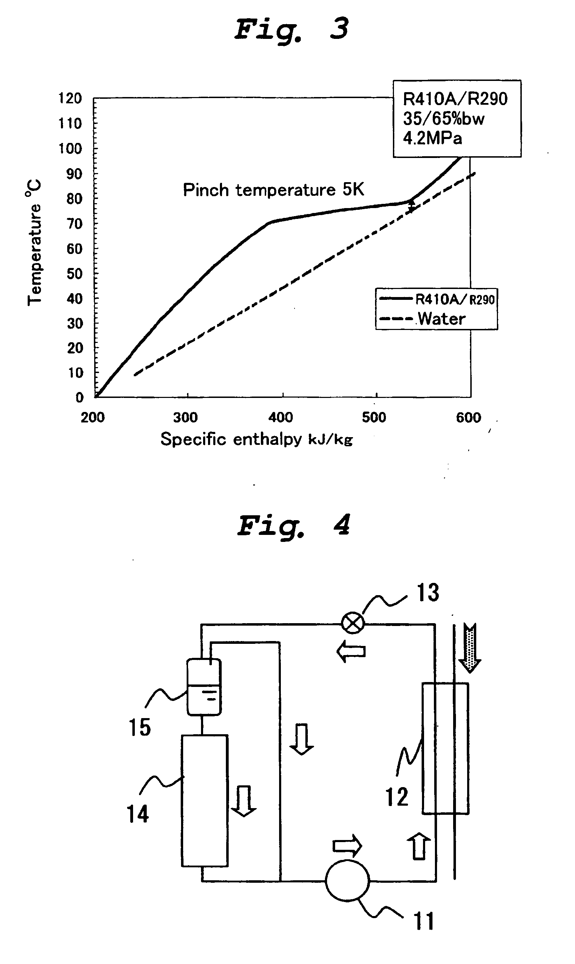

Fig. 3 shows variations in refrigerant temperature and water temperature of the condenser when it is operated under a condition that 35% R410A by weight and 65% R290 by weight are charged into the refrigeration cycle apparatus of the present invention. Here, the pressure of the condensed refrigerant is controlled such that the water temperature at the outlet of the condenser becomes 90° under a condition that the water supply temperature is 10°C, the pinch temperature of the condenser between the refrigerant temperature and the water temperature is 5 degrees, the refrigerant temperature at the outlet of the condenser is 19°C, and the average evaporation temperature of the evaporator is 2°C.

As a result, the water temperature can be heated to 90°C under the condensed refrigerant pressure of 4.2MPa.

In Table 1, heating performance is compared with single refrigerants of R410A and R290 using the following refrigerant mixtures 1) to 4) in the heat pump water heater: 1) a refrigerant mixture comprising of R410A and R290 and in which R290 is in a range of 60 to 100% by weight is included (when R290 is 100% by weight, the refrigerant is a single refrigerant); 2) a refrigerant mixture comprising of R410A and RC270 and in which RC270 is in a range of 50% by weight; 3) a refrigerant mixture comprising of R410A and R600a and in which R600a is in a range of 20% by weight; and 4) a refrigerant mixture comprising of R410A and R600 and in which R600 is in a range of 10% by weight.

**Table 1**

| Refrigerant | | R410A/R290 | | | | | R410A /RC270 | R410A /R600a | R410A /R600 |
|---|---|---|---|---|---|---|---|---|---|
| | R410A | | | | | R290 | | | |
| Concentration % by weight | 100/0 | 40/60 | 30/70 | 20/80 | 10/90 | 0/100 | 50/50 | 80/20 | 90/10 |
| COP | 3.86 | 3.83 | 3.86 | 3.8 | 3.73 | 3.66 | 3.68 | 3.68 | 3.82 |
| Pd MPa | 9.7 | 4.3 | 4 | 3.8 | 3.5 | 3.3 | 4.2 | 4.2 | 4.2 |
| Ps MPa | 0.85 | 0.82 | 0.75 | 0.68 | 0.6 | 0.5 | 0.78 | 0.72 | 0.73 |
| Td °C | 111 | 103 | 103 | 102 | 103 | 103 | 106 | 107 | 109 |
| Pd/Ps | 5.54 | 5.2 | 5.3 | 5.4 | 5.8 | 6.6 | 5.4 | 5.8 | 5.8 |
| Tcave °C | 69.4 | 73 | 74.5 | 76 | 76 | 82.8 | 72.2 | 69.8 | 69.8 |
| ΔTc deg | 0.04 | 6.4 | 7.6 | 7.2 | 4.4 | 0 | 5.1 | 2.7 | 2.1 |

As apparent from Fig. 3 and Table 1, if R290 is 65% or more by weight and R600a is 20% or more by weight and R600 is 10% or more by weight, it is possible to supply water of 90°C at a discharging pressure of the compressor less than 4.2MPa which is a general set pressure (saturation pressure of 65°C) when R410A is used for an air conditioner.

If the concentration of R290 is increased, condensing pressure (Pd) of refrigerant mixture of R410A and R290 is lowered, coefficient of performance (COP) which is higher than those of R410A and R290 when the concentration of R290 is 30% by weight is exhibited, and even if RC270, R600a or R600 is mixed, a value higher than the single refrigerant of R290 is exhibited.

The condensation temperature gradient (ΔTc) in Table 1 is a feature of the non-azeotropic refrigerant mixture, and this gradient shows a temperature variation when a refrigerant is condensed by the condenser under a constant pressure. In a cycle of a water heater in which the condensation temperature gradient is great because the refrigerant mixture of R410A and HC refrigerant has non-azeotropic properties and the temperature becomes 7.6 degrees at the concentration 30% by weight of R290 and water and refrigerant flow such that they are opposed to each other in the condenser to exchange heat, the average condensation temperature is lowered, the compression ratio is lowered, and performance is enhanced.

It can be found from Table 1 that the discharging temperature is lowered by 8 degrees as compared with R410A when R290 is in a range of 70% by weight by the discharging temperature lowering effect of HC refrigerant. The same effect can be exhibited also when HC refrigerant such as RC270, R600a, R600 or the like is mixed. If R410A and HC refrigerant are mixed, when this refrigerant mixture is used in a refrigeration cycle apparatus, the discharging temperature in a compressor can be lowered due to the discharging temperature lowering effect of HC refrigerant as compared with a case in which only R410A is used.

Further, if a refrigerant mixture including R410A and HC refrigerant, which is a natural refrigerant, is used as a refrigerant in a refrigeration cycle apparatus, it is possible to eliminate adverse influence acting on the ozone layer in the stratosphere. Since the refrigerant mixture includes HC refrigerant having less than 10GWP, it is possible to control the global warming as compared with R410A.

The case which the concentration of R410A is small is as follows. That is, as shown in Table 2, the condensation temperature gradient (ΔTc) is a feature of the non-azeotropic refrigerant mixture, and this gradient shows a temperature variation when a refrigerant is condensed by the condenser at a constant pressure. If R410A and hydrocarbon-based element having non-azeotropic properties are mixed, the condensation temperature gradient becomes great, and in a heat pump cycle of a water heater in which water and refrigerant flow such that they are opposed to each other to exchange heat in the condenser, the average condensation temperature is lowered, the compression ratio is lowered, and the performance efficiency is enhanced.

For example, when the critical temperature is 80°C, the condensation temperature gradient (?Tc) becomes 4 degrees or higher if propane is in a range of 90% or lower by weight, cyclopropane is in a range of 90% or lower by weight, isobutane is in a range of 98% or lower by weight, and butane is in a range of 98% or lower by weight.

**Table 2**

| Refrigerant | Mixing ratio | ΔTc |
|---|---|---|
| R410A/R290 | 10/90% | 4.4 degrees |
| | | |
| R410A/RC270 | 10/90% | 4.1 degrees |
| | | |
| R410A/R600a | 2/98% | 4.6 degrees |
| | | |
| R410A/R600 | 2/98% | 5.2 degrees |

Even if a very small amount of odorant mainly having methyl mercaptan, tetrahydrothiophene, ammonia or the like; coloring agent mainly having azoic pigment, fluorescent dye, fluorescent pigment or the like, as a leakage detecting additive; or dissolve additive of odorant, dissolve additive of coloring agent or the like is added to HC refrigerant such as R290, RC270, R600a or R600, the effect can be exhibited with a very small amount on the order of ppm.

When a refrigerant mixture having three ingredients comprising R410A and HF refrigerant is used as a refrigerant for a refrigeration cycle apparatus, excellent characteristics are exhibited.

### (Embodiment 2)

Fig. 4 is a schematic block diagram of a refrigeration cycle apparatus according to an embodiment 2 of the present invention. In Fig. 4, the compressor 11, the condenser 12, the expansion device 13, a gas-liquid separator 15 and the evaporator 14 are connected to one another through pipes to form a closed-circuit. In this refrigeration cycle, a refrigerant circulates in a direction of the arrow. A refrigerant mixture having R410A and HC refrigerant having non-azeotropic properties is charged into the refrigeration cycle as a refrigerant.

In the gas-liquid separator 15, the pipe thereof is connected to the evaporator 14 such that a gas phase refrigerant and a liquid phase refrigerant of the refrigerant mixture are separated from each other and the liquid phase refrigerant flows into the evaporator 14, and the pipe of the gas-liquid separator 15 is connected to a suction line of the compressor 11 such that the gas phase refrigerant flows into the suction line of the compressor 11.

Here, since the non-azeotropic properties of the R410A and HC refrigerant are high, the gas phase refrigerant separated by the gas-liquid separator 15 becomes a refrigerant having high concentration of R410A having low boiling point, and the liquid phase refrigerant becomes a refrigerant having high concentration of HC refrigerant having high boiling point. Since a refrigerant mixture having higher concentration than that of the charged HC refrigerant flows into the evaporator 14, the non-azeotropic properties become smaller, and the temperature gradient also becomes smaller.

As a result, a difference between the inlet refrigerant temperature and the outlet refrigerant temperature of the evaporator becomes smaller. When the outside temperature is low, the temperature of the refrigerant mixture of the evaporator becomes 0°C or lower, and frost is formed on a fin portion having temperature of 0°C or lower. However, since gas and liquid of the refrigerant mixture are separated from each other by the gas-liquid separator and the difference between the inlet refrigerant temperature and the outlet refrigerant temperature of the evaporator can be lowered, it is possible to prevent frost from being partially formed on the evaporator.

If R410A and HC refrigerant coexist, since HC refrigerant is selectively dissolved into the lubricant in an operation state, the lubricant for the compressor 11 may be a lubricant having an insoluble region with respect to R410A in an operation condition of the compressor 11, and it becomes easy to select the lubricant and to manage the viscosity. It is known that solubility between R410A and various lubricants becomes insoluble not only at a low temperature but also at a high temperature. If HC refrigerant is allowed to selectively be solved in a lubricant in the compressor 11, the lubricant discharged from the compressor 11 can easily return to the compressor 11, the amount of the lubricant in the compressor 11 can sufficiently be maintained, and the reliability of the compressor 11 can be enhanced.

Viscosity indices of lubricants having viscosity grade of 5 cm stokes or higher at 100°C are varied depending upon the kinds of lubricants, but such lubricants have viscosity grade of 50 cm stokes at 40°C. If a lubricant having viscosity grade of 5 cm stokes of higher at 100°C and a refrigerant mixture having R410A and HC refrigerant coexist, HC refrigerant is selectively solved in the lubricant in a compressor operation state, and the viscosity of lubricant is lowered.

That is, even if the HC refrigerant is selectively solved in the lubricant and the viscosity of the lubricant is lowered, if a lubricant having viscosity grade of 2 cm stokes or higher is selected, the reliability is enhanced.

Further, even with a lubricant in which the refrigerant mixture having R410A and HC refrigerant is not solved at all or partially solved, if a lubricant having viscosity grade of 2 cm stokes or higher in the compressor operation state is selected, the reliability is enhanced.

The upper limit of the viscosity grade is not especially limited, but an appropriate upper limit is 20 cm stokes or lower at 100°C because electric consumption caused by sliding friction is prevented from being increased. As a lubricant, the following base oil may be used alone or in combination: naphthene-base, paraffin-base mineral oil, alkylbenzene oil, ether oil, ester oil, pollyalkylene glycol oil, carbonate oil and the like.

When a low pressure shell type compressor is used as the compressor 11 used in the embodiments of the present invention, since the lubricant comes into contact with a low pressure refrigerant of the refrigeration cycle, the amount of refrigerant solved into the lubricant can be reduced to an extremely small value and thus, the amount of refrigerant including hydrocarbon which is flammable refrigerant can be reduced, and safety of the apparatus can be enhanced.

As apparent from the above explanation, according to the present invention, since the refrigerant comprises R410A and R290 and the refrigerant mixture includes 65% or higher and 90% or lower R290 by weight, it is possible to eliminate adverse influence acting on the ozone layer in the stratosphere, and to control the global warming, the high pressure is reduced, and a part for an air conditioner using R410A can be used.

Further, according to the present invention, the non-azeotropic properties of the refrigerant mixture is enhanced by mixing R410A and HC refrigerant, and when this is used in a refrigeration cycle apparatus such as a heat pump water heater, the coefficient of performance can be made higher than that of a single refrigerant of hydrocarbon.

Further, according to the present invention, since R410A and HC refrigerant are mixed, when it is used in a refrigeration cycle apparatus, the discharging temperature in the compressor can be lowered than R410A.

Further, according to the present invention, since HC refrigerant is solved in the compressor lubricant, it is possible to secure an oil return of the compressor lubricant which coexists with R410A into the compressor.

Further, according to the present invention, since a lubricant having viscosity grade of 2 cm stokes or higher in a compressor operation state is selected, the reliability is enhanced.

Further, according to the present invention, since a low pressure shell type compressor is used as a compressor, the amount of HC refrigerant solved into a lubricant can be reduced, and a charging amount of refrigerant into a refrigeration cycle can be reduced.

## Claims

1. A refrigerant mixture, **characterized in that** said refrigerant mixture comprises difluoromethane and pentafluoroethane, and propane is mixed into said refrigerant mixture, and **characterized in that** the concentration of propane in the entire refrigerant mixture is 65% or higher and 90% or lower by weight.

2. The refrigerant mixture according to claim 1, **characterized in that** a leakage detecting additive of odorant or coloring agent is added to the refrigerant mixture.

3. A refrigeration cycle apparatus using the refrigerant mixture according to any one of claims 1 to 2.

4. The refrigeration cycle apparatus according to claim 3, **characterized in that** a compressor, a condenser, an expansion device and an evaporator are connected to one another in an annular form to form a refrigeration cycle, said refrigerant mixture flowing through said condenser and a non-heated fluid are allowed to flow such that they are opposed to each other, thereby exchanging heat.

5. The refrigeration cycle apparatus according to claim 4, **characterized in that** a gas-liquid separator is provided between an outlet of said expansion device and an inlet of said evaporator, said refrigerant mixture is separated by said gas-liquid separator into a gas phase refrigerant mixture and a liquid phase refrigerant mixture, a pipe of said gas-liquid separator is connected to said evaporator such that said liquid phase refrigerant mixture flows into said evaporator, and a pipe of said gas-liquid separator is connected to a suction line of said compressor such that said gas phase refrigerant mixture flows into said suction line of said compressor.

6. The refrigeration cycle apparatus according to claim 4 or 5, **characterized in that** a lubricant which is solved into said refrigerant mixture under an operation condition of said compressor and which has viscosity of 2 cm stokes or higher is used as a lubricant to be charged into said compressor.

7. The refrigeration cycle apparatus according to claim 4 or 5, **characterized in that** a low pressure shell type compressor is used as said compressor.

## Patentansprüche

1. Kühlmittelmischung, **dadurch gekennzeichnet, dass** die Kühlmittelmischung Difluormethan und Pentafluorethan enthält, und Propan der Kühlmittelmischung beigemischt wird, und **dadurch gekennzeichnet, dass** die Propan-Konzentration in der gesamten Kühlmittelmischung 65 % oder mehr Massenanteile sowie 90 % oder weniger Massenanteile beträgt.

2. Kühlmittelmischung gemäß Anspruch 1, **dadurch gekennzeichnet, dass** ein Leckerfassungszusatz oder Odoriermittel oder Färbemittel der Kühlmittelmischung beigefügt ist.

3. Kältekreislaufvorrichtung, die die Kühlmittelmischung gemäß einem der Ansprüche 1 bis 2 verwendet.

4. Kältekreislaufvorrichtung gemäß Anspruch 3, **dadurch gekennzeichnet, dass** ein Kompressor, ein Kühler, eine Expansionsvorrichtung und ein Verdunster aneinander in ringförmiger Form miteinander verbunden sind, um einen Kältekreislauf zu bilden, wobei die Kühlmittelmischung, die durch den Kühler fließt, und eine nicht erwärmte Flüssigkeit so fließen können, dass sie einander gegenüberliegen, wodurch sie Wärme austauschen.

5. Kältekreislaufvorrichtung gemäß Anspruch 4, **dadurch gekennzeichnet, dass** eine Gas-Flüssigkeit-Trennvorrichtung zwischen einem Auslass der Expansionsvorrichtung und einem Einlass des Verdunsters vorgesehen ist, wobei die Kühlmittelmischung durch die Gas-Flüssigkeit-Trennvorrichtung in eine Gas-Phasen-Kühlmittelmischung und eine Flüssig-Phasen-Kühlmittelmischung getrennt wird, wobei ein Rohr der Gas-Flüssigkeit-Trennvorrichtung mit dem Verdunster verbunden ist, so dass die FlüssigPhasen-Kühlmittelmischung in den Verdunster fließt, und ein Rohr der Gas-Flüssigkeit-Trennvorrichtung mit einer Ansaugleitung des Kompressors verbunden ist, so dass die Gas-Phasen-Kühlmittelmischung in die Ansaugleitung des Kompressors fließt.

6. Kühlkreislaufvorrichtung gemäß Anspruch 4 oder 5, **dadurch gekennzeichnet, dass** ein Schmiermittel, das in der Kühlmittelmischung unter einer Betriebsbedingung des Kompressors aufgelöst ist und das eine Viskosität von 2 cm Stokes oder höher hat, als Schmiermittel verwendet wird, um in den Kompressor gefüllt zu werden.

7. Kühlkreislaufvorrichtung gemäß Anspruch 4 oder 5, **dadurch gekennzeichnet, dass** ein Niederdruckhüllenkompressor als Kompressor verwendet wird.

## Revendications

1. Mélange réfrigérant, **caractérisé en ce que** ledit mélange réfrigérant comprend du difluorométhane et du pentafluoroéthane, et du propane est mélangé dans ledit mélange de réfrigérants, et **caractérisé en ce que** la concentration de propane dans le mélange réfrigérant total est de 65 % ou davantage et 90 % ou moins en poids.

2. Mélange réfrigérant selon la revendication 1, **caractérisé en ce qu'**un agent additif détectant les fuites d'agent odorant ou colorant est ajouté au mélange réfrigérant.

3. Appareil de cycle frigorifique utilisant le mélange réfrigérant selon l'une quelconque des revendications 1 à 2.

4. Appareil de cycle frigorifique selon la revendication 3, **caractérisé en ce qu'**un compresseur, un condenseur, un dispositif de détente et un évaporateur sont raccordés entre eux d'une manière annulaire pour former un cycle frigorifique, ledit mélange réfrigérant s'écoulant à travers ledit condenseur et un fluide non chauffé sont mis en circulation de façon à pouvoir être opposés entre eux, effectuant ainsi un échange thermique.

5. Appareil de cycle frigorifique selon la revendication 4, **caractérisé en ce qu'**un séparateur gaz-liquide est prévu entre une sortie dudit dispositif de détente et une entrée dudit évaporateur, ledit mélange réfrigérant est séparé par ledit séparateur gaz-liquide dans un mélange réfrigérant en phase gazeuse et un mélange réfrigérant en phase liquide, une conduite dudit séparateur gaz-liquide est raccordée audit évaporateur, de telle sorte que ledit mélange réfrigérant en phase liquide s'écoule dans ledit évaporateur, et une conduite dudit séparateur gaz-liquide est raccordée à une conduite d'aspiration dudit compresseur, de telle sorte que ledit mélange réfrigérant en phase gazeuse s'écoule dans ladite conduite d'aspiration dudit compresseur.

6. Appareil de cycle frigorifique selon la revendication 4 ou la revendication 5, **caractérisé en ce que** l'on utilise un lubrifiant qui est dissous dans ledit mélange réfrigérant dans une condition de fonctionnement dudit compresseur et qui présente une viscosité de 2 cm stokes ou davantage et que l'on utilise en tant que lubrifiant pour être chargé dans ledit compresseur.

7. Appareil de cycle frigorifique selon la revendication 4 ou la revendication 5, **caractérisé en ce que** l'on utilise un compresseur du type à volutes basse pression en tant que dit compresseur.
